# EUROPÄISCHE PATENTSCHRIFT

(11) **EP 2 884 817 B1**
(45) Veröffentlichungstag und Bekanntmachung des Hinweises auf die Patenterteilung: **30.08.2017**
(21) Anmeldenummer: 13005815.9
(22) Anmeldetag: 13.12.2013
(51) Int. Cl.: H05B 1/02, H05B 3/78, H05K 7/20, B60H 1/22

(54) **Elektrische Heizvorrichtung und Verfahren zu deren Herstellung**
Electric heating device and method for its production
Dispositif de chauffage électrique et son procédé de fabrication

(43) Veröffentlichungstag der Anmeldung: 17.06.2015
(73) Patentinhaber: Eberspächer catem GmbH & Co. KG, 76863 Herxheim (DE)
(72) Erfinder: Walz, Kurt, 76767 Hagenbach (DE); Morgen, Christian, 76761 Rülzheim (DE); Niederer, Michael, 76889 Kapellen-Drusweiler (DE)
(74) Vertreter: Grünecker Patent- und Rechtsanwälte PartG mbB

(56) Entgegenhaltungen:
- DE-A1-102010 036 910
- US-A- 6 057 593
- US-A1- 2005 201 069
- US-A1- 2006 043 551
- US-A1- 2008 053 981
- US-A1- 2011 292 624
- US-A1- 2013 186 883

## Beschreibung

Die vorliegende Erfindung betrifft eine elektrische Heizvorrichtung, insbesondere für ein Kraftfahrzeug, mit einem Gehäuse, welches eine von einem Medium durchströmbare Zirkulationskammer umschließt, in welche wenigstens eine Heizrippe hineinragt, sowie ein Verfahren zu deren Herstellung. Diese Heizrippe steht Wärme leitend mit einem PTC-Heizelement in Kontakt. Des Weiteren ist in baulicher Einheit mit dem so gebildeten Leistungsteil eine Steuervorrichtung vorgesehen mit wenigstens einer Steuerleiterplatte, die in einem Steuergehäuse aufgenommen ist, und mit wenigstens einem Verlustleistung erzeugenden Halbleiter-Leistungsschalter, der elektrisch mit Leiterbahnen der Steuerleiterplatte verbunden ist. Eine solche elektrische Heizvorrichtung ist beispielsweise aus den EP 1 872 986 A1, US 2008/0053981 A1 oder US 2013/0186883 A1 am Beispiel eines Heizers zur Erwärmung von flüssigem Fluid vorbeschrieben. Als gattungsgemäß können aber auch Luftheizer angesehen werden, beispielsweise ein in baulicher Einheit mit einer Steuervorrichtung vorgesehener PTC-Luftheizer, wie er aus der EP 0 901 311 A1 und der EP 1 157 867 B1 bekannt ist.

Bei elektrischen Heizvorrichtungen der eingangs genannten Art mit einem Halbleiter-Leistungsschalter besteht zum einen die Notwendigkeit, die von dem Halbleiter-Leistungsschalter erzeugte Verlustleistung an die Umgebung abzuführen. Hierzu wird mitunter die Verlustleistung als zusätzliche Heizenergie genutzt. Darüber hinaus ist man aber auch bemüht, den Halbleiter-Leistungsschalter hinreichend gegenüber der Umgebung einzuhausen, so dass dieser den Umgebungsbedingungen nicht ausgesetzt ist. Dies ist insbesondere von Bedeutung beim Einsatz der elektrischen Heizvorrichtung in einem Kraftfahrzeug, da die Umgebung der elektrischen Heizvorrichtung mitunter erhebliche Staubmengen, bzw. hohe Luftfeuchtigkeit mit sich führen kann. Schließlich wird der elektrischen Abschirmung der Leistungstransistoren zunehmend Bedeutung beigemessen. Es geht hier insbesondere darum, der EMV-Problematik Rechnung zu tragen. Hierzu ist es üblicherweise notwendig, die den Leistungsstrom schaltenden Bauelemente im Wesentlichen vollständig in einer metallischen Einhausung vorzusehen.

Die vorliegende Erfindung möchte insofern eine Verbesserung schaffen und eine elektrische Heizvorrichtung der eingangs genannten Art sowie ein Verfahren zu deren Herstellung angeben, die den obigen Bedürfnissen ganz oder teilweise Rechnung trägt. Dabei geht es um eine gute Ableitung der von dem Halbleiter-Leistungsschalter erzeugten Verlustleistung an die Umgebung. Ferner soll der Halbleiter-Leistungsschalter aber auch mit der notwendigen Sicherheit in dem Steuergehäuse aufgenommen sein.

Zur Lösung der obigen Aufgabe wird mit der vorliegenden Erfindung eine elektrische Heizvorrichtung mit den Merkmalen von Anspruch 1 angegeben.

Bei dieser Erfindung ist der Halbleiter-Leistungsschalter Wärme leitend an dem Steuergehäuse anliegend vorgesehen und unmittelbar daran befestigt. Während im Stand der Technik der Halbleiter-Leistungstransistor lediglich unmittelbar mit der Steuerleiterplatte verbunden ist, schlägt die vorliegende Erfindung vor, diesen Halbleiter-Leistungsschalter zusätzlich auch unmittelbar mit dem Steuergehäuse zu verbinden. Hierdurch ergibt sich eine innige wärmemäßige Kontaktierung des Halbleiter-Leistungsschalters an das Steuergehäuse. Während in dem zuvor beschriebenen Stand der Technik gemäß EP 0 901 311 A1 bzw. EP 1 157 867 B1 die Anlage eines gesonderten Kühlelementes an den Halbleiter-Leistungsschalter lehrt, welches Kühlelement über eine das Kühlelement und den Halbleiterleistungsschalter überbrückendes Federelement unter Vorspannung an eine flächige Anlagefläche des Halbleiter-Leistungsschalters angelegt ist, erfolgt bei der vorliegenden Erfindung der thermische Kontakt mit dem Steuergehäuse. Dieses dient als Wärmesenke und führt die von dem Halbleiter-Leistungsschalter erzeugte Verlustleistung nach außen ab. Das Steuergehäuse kann hierfür in an sich bekannter Weise an seiner außen freiliegenden Oberfläche Kühlrippen aufweisen. Üblicherweise sind die Kühlrippen unmittelbar gegenüberliegend zu dem Halbleiter-Leistungsschalter, d.h. auf der dem Halbleiter-Leistungsschalter gegenüberliegenden Außenseite vorgesehen, so dass die von dem Halbleiter-Leistungsschalter erzeugte Wärme lediglich durch die Wandung des Steuergehäuses hindurch treten muss und dort abgeführt werden kann. Da im Gegensatz zum Stand der Technik sich die Notwendigkeit erübrigt, die separaten Kühlelemente dichtend durch das Steuergehäuse hindurchzuführen, um die gewünschte Einhausung der Steuerleiterplatte und insbesondere der Halbleiter-Leistungstransistoren zu erreichen, kann bei der vorliegenden Erfindung der Halbleiter-Leistungsschalter vollständig in dem Steuergehäuse eingehaust sein. Das Steuergehäuse ist üblicherweise aus einem gut Wärme leitenden Werkstoff, insbesondere Metall gebildet. Vorzugsweise ist das Steuergehäuse als Aluminium-Druckgussteil ausgebildet und formt die Kühlrippen einteilig aus.

Die unmittelbare Befestigung des Halbleiter-Leistungsschalters erfolgt durch eine adhäsive Masse mit guter thermischer Leitfähigkeit. Diese Masse wird insbesondere aus einem Silikonkleber gebildet. Der Silikonkleber hat vorzugsweise darin dispergierte Partikel mit guter und gegenüber der Masse erhöhter Wärmeleitfähigkeit, beispielsweise Glaskugeln. Die adhäsive Masse ist vorzugsweise elektrisch isolierend ausgebildet, so dass das Steuergehäuse von dem Leistungstransistor elektrisch getrennt ist.

Der Halbleiter-Leistungsschalter ist üblicherweise auf der Steuerleiterplatte vormontiert. Die Steuerleiterplatte wird in der Regel zunächst mit sämtlichen Bauteilen bestückt, die daran aufgelötet sind. Die so vormontierte Steuerleiterplatte wird in einem nachfolgenden Herstellungsschritt in das Steuergehäuse eingesetzt, und zwar unter Zwischenlage der adhäsiven Masse zwischen dem Leistungstransistor und dem Gehäuse. Diese adhäsive Masse wird üblicherweise zuvor auf eine Gegenfläche zu dem Leistungstransistor aufgeklebt, die durch das Steuergehäuse gebildet ist. Die adhäsive Masse ist vorzugsweise eine aushärtende Masse. Nach dem Aushärten der adhäsiven Masse ist der Leistungstransistor einerseits unmittelbar durch Kleben mit dem Steuergehäuse verbunden und andererseits aufgrund der Vormontage mit der Steuerleiterplatte.

Der Halbleiter-Leistungsschalter ist innerhalb eines den Halbleiter-Leistungsschalter umgebenden Rahmens aufgenommen, der die adhäsive Masse umfänglich umgibt. Dadurch ist sichergestellt, dass die zu einem Halbleiter-Leistungsschalter verwendete adhäsive Masse im Wesentlichen vollständig dazu Verwendung findet, den Halbleiter-Leistungsschalter zu verkleben und vollflächig an die Gegenfläche des Steuergehäuses anzulegen. Der Rahmen dient dementsprechend als umfänglich den Halbleiter-Leistungsschalter vollständig umgebendes Bassin, welches eine ungewünschte Ausbreitung der adhäsiven Masse innerhalb des Gehäuses verhindert.

Dieser Rahmen umgibt den Halbleiter-Leistungsschalter mit Abstand, so dass die adhäsive Masse nach dem Aufdrücken des Halbleiter-Leistungsschalters im Rahmen der Montage der Steuerleiterplatte auf das Steuergehäuse in einen Zwischenraum zwischen dem Rahmen und dem Halbleiter-Leistungsschalter verdrängt werden kann und dabei vorzugsweise aufsteigt, so dass nicht nur die der Steuerleiterplatte gegenüberliegende und sich üblicherweise parallel dazu erstreckende Anlagefläche des Halbleiter-Leistungsschalters von der adhäsiven Masse vollständig benetzt ist, sondern diese auch sich hierzu im Wesentlichen rechtwinklig zu der Anlagefläche erstreckende Seitenwände des Halbleiter-Leistungsschalters ganz oder teilweise umgibt. Dadurch kann die thermische Verbindung zwischen dem Halbleiter-Leistungsschalter und dem Steuergehäuse verbessert werden. Dabei füllt die adhäsive Masse zumindest den durch den Rahmen umrahmten Montageraum für den Halbleiter-Leistungsschalter vollständig aus. Es kann auch sein, dass die adhäsive Masse über den zu der Steuerleiterplatte hin ragenden Rand des Rahmens hinaus verdrängt wird.

Gemäß einer bevorzugten Weiterbildung der vorliegenden Erfindung bildet das Gehäuse eine erhabene Anlagefläche für den Halbleiter-Leistungsschalter aus. Dies gibt die Möglichkeit innerhalb des Gehäuses und neben derjenigen Stelle, an welcher der Halbleiter-Leistungsschalter mit dem Steuergehäuse Wärme leitend kontaktiert ist, weitere Bauteile aufzunehmen. Darüber hinaus bietet die Weiterbildung den Vorteil, dass der Rahmen gegenüber der durch das Gehäuse gebildeten Gegen- bzw. Anlagefläche vor und zurückspringend ausgebildet sein kann. Dies erleichtert zum einen die Positionierung des Rahmens innerhalb des Gehäuses. Der Rahmen umgibt die erhabene Anlagefläche umfänglich und ist hierdurch sicher vorpositioniert.

Vorzugsweise umgibt der Rahmen mit seinem gegenüber der Anlagefläche zurückspringenden Bereich einen die erhabene Anlagefläche ausbildenden Gehäusevorsprung des Steuergehäuses mit Abstand. Dabei wird vorzugsweise ein umfänglicher Ringspalt zwischen dem Rahmen und dem Gehäusevorsprung ausgebildet, der beim Aufbringen des Leistungstransistors auf den Gehäusevorsprung und Verdrängen der adhäsiven Masse ebenfalls ganz oder teilweise mit adhäsiver Masse gefüllt wird, so dass die Verbindung zwischen dem Rahmen und dem Steuergehäuse verbessert ist. Diese Weiterbildung ist insbesondere für die sichere Befestigung des Leistungstransistors unmittelbar an dem Steuergehäuse in den relativ rauen Umgebungsbedingungen in einem Kraftfahrzeug von Bedeutung, wo die in dem Fahrzeug verbauten Komponenten ständiger Vibration ausgesetzt sind.

Gemäß einer weiteren bevorzugten Ausgestaltung der vorliegenden Erfindung weist der Rahmen zumindest einen auf der Anlagefläche aufliegenden Haltesteg auf, der sich in einen Bereich zwischen der Anlagefläche und dem Halbleiter-Leistungsschalter erstreckt. Dieser Haltesteg dient danach nicht nur zur Vorpositionierung des Rahmens und Halterung desselben auf der Anlagefläche bis die Klebeverbindung ausgehärtet ist. Vielmehr wirkt der Haltesteg auch als Abstandshalter, der einen definierten Abstand zwischen dem Leistungstransistor und der Anlagefläche ausbildet. Dieser Aspekt kann für sich erfindungswesentlich sein, d.h. ein in dieser Weise mit zumindest einem Haltesteg auf einer Anlagefläche anliegender Rahmen, der mit seinem Haltesteg einen definierten Abstand zwischen der metallischen Anlagefläche und dem Leistungstransistor vorgibt, ist auch für sich allein mit den oberbegrifflichen Merkmalen von Anspruch 1 erfindungswesentlich. Dabei kommt es nicht darauf an, dass der Halbleiter-Leistungsschalter unmittelbar mit dem Steuergehäuse verbunden ist. Vielmehr kann diese Abstandsfunktion auch dann von Bedeutung sein, wenn der Halbleiter-Leistungsschalter nicht unmittelbar mit dem Steuergehäuse verbunden ist. So ist es beispielsweise denkbar, zwischen dem HalbleiterLeistungsschalter und dem Steuergehäuse lediglich eine Wärmeleitmasse vorzusehen, die keine erheblichen adhäsiven Eigenschaften hat.

Der Rahmen ist insbesondere mit Blick auf die Funktion des Haltestegs als Abstandshalter vorzugsweise aus einem hoch isolierenden Material, wie beispielsweise Silikon oder Polyamid hergestellt. Der von dem Rahmen definierte Abstand zwischen dem Halbleiter-Leistungstransistor bzw. -schalter und dem Steuergehäuse sollte mit Blick auf die gewünschte gute Wärmeübertragung zwischen dem Halbleiter-Leistungstransistor und dem Steuergehäuse möglichst gering gewählt werden. Der wenigstens eine Haltesteg verhindert hierbei eine unmittelbare Kontaktierung zwischen dem Halbleiter-Leistungstransistor und dem Steuergehäuse. Abhängig von der Größe des Halbleiter-Leistungstransistors können auch mehrere Haltestege als Abstandshalter vorgesehen sein. Es versteht sich, dass diese Haltestege jeweils dieselbe Stärke haben, d.h. den gleichen minimalen Abstand sicher stellen.

Zur Lösung des verfahrensmäßigen Aspekts der zugrundeliegenden Problemstellung schlägt die vorliegende Erfindung ein Verfahren zur Herstellung einer elektrischen Heizvorrichtung, insbesondere für ein Kraftfahrzeug vor. Diese elektrische Heizvorrichtung hat in der zuvor beschriebenen Weise ein Gehäuse, welches eine von einem Medium durchströmbare Zirkulationskammer umschließt. In diese Zirkulationskammer ragt wenigstens eine Heizrippe hinein. Dieses steht mit wenigstens einem PTC-Heizelement in Wärme leitendem Kontakt, welches üblicherweise in die Heizrippe eingebracht und darin befestigt ist. Des Weiteren hat die elektrische Heizvorrichtung einen in baulicher Einheit mit dem zuvor erwähnten Leistungsteil vorgesehenen Steuerteil in Form einer Steuereinrichtung mit wenigstens einer Steuerleiterplatte, die in einem Steuergehäuse aufgenommen ist und mit wenigstens einem Verlustleistung erzeugenden Halbleiter-Leistungsschalter bestückt ist, der elektrisch mit Leiterbahnen der Steuerleiterplatte verbunden ist. Bei dem erfindungsgemäßen Verfahren wird zur Lösung der zugrundeliegenden Aufgabenstellung die Steuerleiterplatte vor dem Einbau in das Steuergehäuse vormontiert, d.h. die einzelnen elektrischen bzw. elektronischen Bauteile werden auf der Steuerleiterplatte angeordnet und daran befestigt sowie mit den zugeordneten Leiterbahnen der Steuerleiterplatte verbunden, regelmäßig verlötet. Die in dieser Weise vorbereitete Baugruppe, d.h. die fertig vormontierte Steuerleiterplatte wird danach in das Gehäuse eingesetzt. Dabei wird der Halbleiter-Leistungstransistor auf eine auf eine Anlagefläche des Gehäuses aufgebrachte Masse aufgedrückt. Diese Masse ist eine Masse mit guter Wärmeleitfähigkeit, so dass der Halbleiter-Leistungstransistor nach der Montage der Steuerleiterplatte gut Wärme leitend unmittelbar mit dem Gehäuse gekoppelt ist.

Gemäß einer bevorzugten Weiterbildung des erfindungsgemäßen Verfahrens wird die Masse beim Aufdrücken in Richtung auf die Anlagefläche in einer Richtung quer zu der Anlagefläche verdrängt, so dass die Masse auch die Umfangsfläche des Halbleiter-Leistungstransistors kontaktiert. Diese Umfangsfläche erstreckt sich üblicherweise rechtwinklig zu der Erstreckungsebene der Steuerleiterplatte bzw. der Anlagefläche. Danach steigt die Masse von der Anlagefläche in Richtung auf die Steuerleiterplatte. Die Masse wird beim Aufdrücken des Halbleiter-Leistungstransistors in einen umfänglichen Zwischenraum gedrängt, der zwischen dem Halbleiter-Leistungstransistor und einem diesen umgebenden Rahmen vorgesehen ist. Der Rahmen umgibt den Halbleiter-Leistungsschalter mit geringem Abstand vorzugsweise von zwischen 1 mm und 15 mm, bevorzug von zwischen 2 mm und 10 mm. Das hierbei sich ergebende Spaltmaß wird beim Aufdrücken des Halbleiter-Leistungstransistors mit der Masse vollständig ausgefüllt. Vielmehr noch wird aber auch die Masse beim Aufdrücken des Halbleiter-Leistungstransistors zumindest in Richtung auf die Steuerleiterplatte gedrängt.

Weitere Einzelheiten und Vorteile der vorliegenden Erfindung ergeben sich aus der nachfolgenden Beschreibung von zwei Ausführungsbeispielen in Verbindung mit der Zeichnung. In dieser zeigen:
- Figur 1: eine teilweise geschnittene perspektivische Seitendarstellung eines ersten Ausführungsbeispiels der vorliegenden Erfindung;
- Figur 2: eine Explosionsdarstellung des in Figur 1 gezeigten ersten Ausführungsbeispiels der vorliegenden Erfindung;
- Figur 3: eine in der X-Y-Ebene liegende Querschnittsansicht des ersten Ausführungsbeispiels von oben;
- Figur 4: eine in der X-Z-Ebene liegende Längsschnittsansicht des ersten Ausführungsbeispiels;
- Figur 5: eine in der Y-Z-Ebene liegende Querschnittsansicht des ersten Ausführungsbeispiels;
- Figur 6: eine perspektivische Darstellung einer in der X-Y-Ebene liegenden Längsschnittansicht von unten, d.h. auf einen Gehäusedeckel;
- Figur 7: eine perspektivische Seitenansicht auf ein Leistungsteil des Ausführungsbeispiels;
- Figur 8: ein vergrößertes Detail in einer Längsschnittansicht in der X-Y-Ebene von Leistungsteil und Steuerteil;
- Figur 9: eine perspektivische Draufsicht auf das offene Steuergehäuse vor dem Einbringen der Leiterplatte;
- Figur 10: eine perspektivische Draufsicht nach Figur 9 mit darin montierten Leistungstransistoren und weiteren, der Steuerleiterplatte zugeordneten Elementen innerhalb des Steuergehäuses;
- Figur 11: eine perspektivische Draufsicht gemäß den Figuren 9 und 10 nach Montage der Steuerleiterplatte; und
- Figur 12: eine perspektivische Explosionsdarstellung des Gehäuses für ein anderes Ausführungsbeispiel der vorliegenden Erfindung.

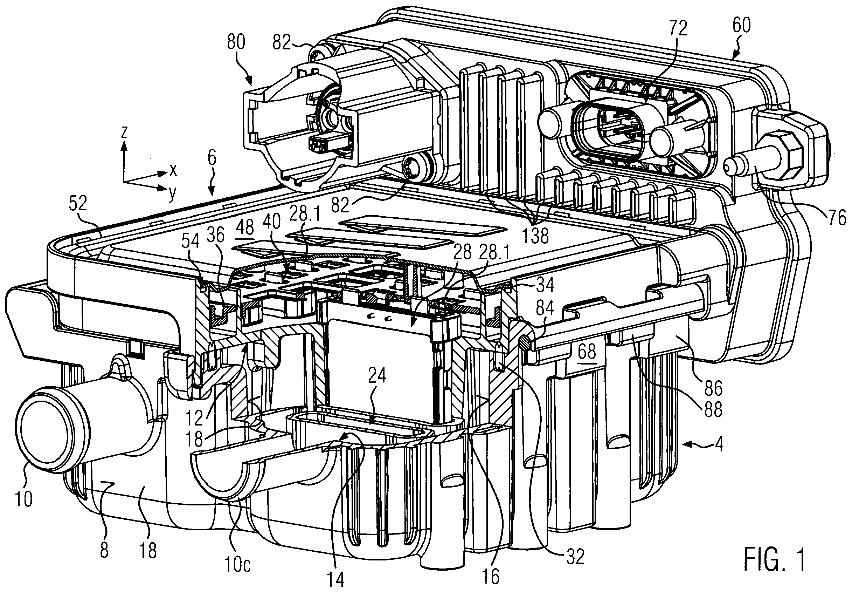

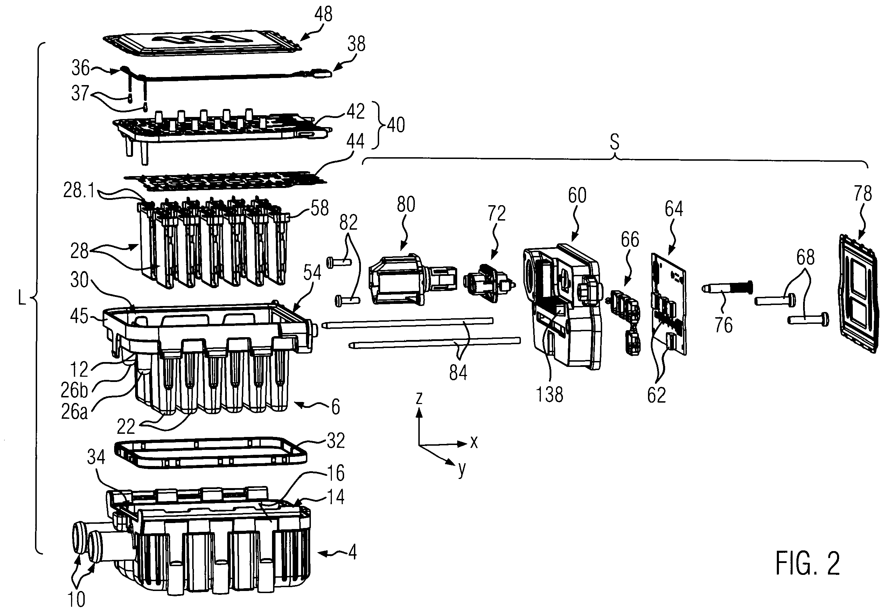

Die Figuren 1 und 2 lassen die wesentlichen Bestandteile des ersten Ausführungsbeispiels erkennen. Bei diesem Ausführungsbeispiels handelt es sich um eine elektrische Heizvorrichtung zur Temperierung eines flüssigen Temperiermediums, insbesondere einer Temperierflüssigkeit, die zu gleichen Teilen aus Wasser und Glykol besteht. Die elektrische Heizvorrichtung weist ein versiegeltes Gehäuse 2 mit einem als Kunststoff-Spritzgussteil ausgebildeten wannenförmigen Gehäuseunterteil 4 und einem dieses Gehäuseunterteil 4 dichtend abdeckenden Gehäusedeckel 6 auf. Von einer ersten Stirnseite 8 des Gehäuseunterteils 4 ragen zwei Anschlussstutzen 10 ab, welche einteilig an dem Gehäuseunterteil 4 ausgeformt sind und vorliegend die Rohranschlüsse des Ausführungsbeispiels ausbilden. Der Gehäusedeckel 6 definiert eine Trennwand 12, die oberseitig eine Zirkulationskammer 14 begrenzt, die im Übrigen durch Wandungen des Gehäuseunterteils 4 begrenzt wird, nämlich sich parallel zu den Anschlussstutzen 10 erstreckende Längsseitenwände 16 und sich rechtwinklig hierzu erstreckende Stirnseitenwände 18. Durch eine in Figur 1 erkennbare Abteilwand 20 wird die Zirkulationskammer 14 in zwei Zirkulations-Teilkammern 14a, 14b unterteilt.

Der Gehäusedeckel 6 ist bei dem gezeigten Ausführungsbeispiel nicht nur als Abdeckung für die Zirkulationskammer 14 vorgesehen. Vielmehr bildet der Gehäusedeckel 6 auch Heizrippen 22 mit jeweils U-förmigen Ausnehmungen 24 aus. Die Heizrippen 18 sind einteilig an dem Gehäusedeckel 6 vorgesehen. Der Gehäusedeckel 6 ist als Druckgussteil und aus Aluminium hergestellt. Neben den Heizrippen 22 ragen in Verlängerung der Anschlussstutzen 10 zwei Messfühlerdome 26 in die Zirkulationskammer 14 hinein. Jeder Zirkulations-Teilkammer 14a, 14b ist jeweils ein Messfühlerdom 26a, 26b zugeordnet.

Das Füllvolumen der Zirkulationskammer bei elektrischen Flüssigkeitsheizern der nachstehend beschriebenen Art liegt zwischen 450 ml und 200 ml, bevorzugt zwischen 400 ml und 220 ml und besonders bevorzugt zwischen 300 ml und 230 ml. Dieses Füllvolumen umfasst auch das Füllvolumen des Stutzens. Jeder Stutzen für sich hat ein Füllvolumen von etwa 7 ml. Das gezeigte Ausführungsbeispiel ist üblicherweise in einem Kühlwasserkreislauf in einem Fahrzeug integriert, der ein Volumen von etwa 5 bis 6 Litern hat. In diesen Kühlwasserkreislauf kann zumindest ein Wärmetauscher für die Erwärmung von Luft in der Fahrgastzelle integriert sein. Ergänzend oder alternativ kann auch der Kühlwasserkreislauf Wärmetauscherflächen zu technischen Komponenten eines Elektrofahrzeuges haben, um diese bei kalten Umgebungstemperaturen auf die notwendige Betriebstemperatur zu bringen. Insbesondere dient die elektrische Heizvorrichtung jedenfalls auch der Erwärmung einer Batterie in einem Kraftfahrzeug, welches ausschließlich elektrisch angetrieben werden kann. Der Heizer kann auch so geschaltet sein, dass er sich als Standheizung betreiben lässt, um die Fahrgastzelle vor Inbetriebnahme des Fahrzeugs auf eine für den Benutzer angenehme Temperatur zu erwärmen. Dies erfolgt durch Heizen des flüssigen Fluids, das über einen Wärmetauscher geführt wird, welcher von einem in dem Fahrzeug integrierten Gebläse angestrahlt wird, so dass durch den Wärmetauscher hindurchgeleitete Luft sich an dem Wärmetauscher erwärmt und in die Fahrgastzelle eingeleitet wird. Die Wärmeleistung des elektrischen Zusatzheizers beträgt dabei zwischen 5,0 und 8,0 kW, bevorzugt zwischen 7,0 und 8,0 kW. Diese Heizleistung wird mit einer Ausgestaltung verwirklicht, bei welcher in jeder einzelnen U-förmigen Ausnehmung 24 ein einziges elektrisches Heizelement 28 vorgesehen ist und insgesamt zwischen 9 und 16, bevorzugt zwischen 10 und 14 U-förmige Ausnehmungen in die Zirkulationskammer 14 zwischen 8 und 16, bevorzugt zwischen 10 und 14 Heizrippen 22 hineinragen, die jeweils ein elektrisches Heizelement 28 aufweisen. Die Flächenleistungsdichte liegt zwischen 25 und 27 W/cm².

In jede der U-förmigen Ausnehmungen 24 ist bei dem gezeigten Ausführungsbeispiel ein elektrisches Heizelement 28 eingesetzt. Dieses elektrische Heizelement 28 ist in der EP 1 872 986 A1 bzw. EP 1 921 896 A1 beschriebenen Weise ausgestaltet und in der beispielsweise in EP 2 440 004 A1 bzw. EP 1 931 176 A1 beschriebenen Weise in der U-förmigen Ausnehmung 24 aufgenommen und dort Wärme leitend an die zugeordnete Heizrippe 22 angelegt. Insofern wird die Offenbarung der zuvor genannten Offenlegungsschriften der vorliegenden Anmelderin durch Verweis in die den Offenbarungsgehalt der vorliegenden Anmeldung aufgenommen. Sämtliche dort beschriebenen Details der elektrischen Heizelemente 28 sind erfindungswesentlich für das hier diskutierte Ausführungsbeispiel. Dies gilt nicht nur für die Anordnung der Heizelemente 28 in den Ausnehmungen 24 und den Wärme leitenden Kontakt zwischen den Heizelementen 28 und den Innenflächen der Heizrippen 22, sondern auch für den nachstehend noch näher erläuterten elektrischen Anschluss der einzelnen Heizelemente 28 über ihre Kontaktzungen 28.1, die elektrische Anschlüsse der Heizelemente 28 ausbilden, in einer mit Bezugszeichen 30 gekennzeichneten Anschlusskammer.

In den Figuren 1 und 2 ist ferner zu erkennen, dass der Gehäusedeckel 6 unter Zwischenlage eines Dichtelementes 32 an dem Gehäuseunterteil 4 anliegt. Das Dichtelement 32 ist in einer an dem Gehäuseunterteil 4 ausgesparten Nut 34 eingebracht und dort gehalten. Das Dichtelement 32 überragt eine stirnseitige Endfläche des Gehäuseunterteils 4, auf welche der Gehäusedeckel 6 aufgesetzt ist.

In der Explosionsdarstellung nach Figur 2 ist oberhalb der als PTC-Heizelemente ausgebildeten elektrischen Heizelemente 28 ein Messleitungsstrang 36 gezeigt, der mit den Signalausgängen von in den Messfühlerdomen 26 eingebrachten Messfühlern 37 elektrisch verbunden ist. Das andere Ende des Messleitungsstranges 36 liegt mit seinen Messleitungsanschlusszungen 38 frei.

Unterhalb davon ist in Figur 2 eine Anschlussleiterplatte 40 dargestellt, die aus einer Kunststoffplatte 42 und einer damit verbundenen gestanzten und elektrische Leiterbahnen ausbildenden Blechplatine 44 gebildet ist. Diese Anschlussleiterplatte 40 ist im Detail in der EP 2 505 931 A1 beschrieben, auf deren Offenbarung insofern verwiesen und hierdurch in den Offenbarungsgehalt der vorliegenden Anmeldung aufgenommen wird. Auch diese Ausgestaltung der Anschlussleiterplatte 40 kann für sich erfindungswesentlich für die Verwirklichung der vorliegend beschriebenen Erfindung sein. Der Gehäusedeckel 6 hat einen die Trennwand 12 überragenden umlaufenden Rand 45, der ein Anschlussgehäuse 46 für den elektrischen Anschluss der Kontaktzungen 28.1 der Heizelemente 28 an die Anschlussleiterplatte 40 umgibt. Zwischen dem Rand 45 und einteilig an dem Gehäusedeckel 6 ausgeformten Stegen 49 ist ein halb umlaufender Aufnahmeraum 51 für den Messleitungsstrang 36 vorgesehen.

Zuoberst ist in Figur 2 ein Anschlussgehäusedeckel 48 dargestellt, der aus einer stanzbiegebearbeiteten Blechplatte 50 und einer randseitig daran angespritzten TPE-Dichtung 52 besteht, die in eine an dem Gehäusedeckel 6 ausgesparte Dichtnut 54 eingreift, um das Anschlussgehäuse 46 gegenüber der Umgebung abzudichten. Der Deckel 48 liegt auf den Stegen 49 auf.

Die zuvor beschriebenen Bauteile werden zur Montage der elektrischen Heizvorrichtung in Längsrichtung der U-förmigen Ausnehmungen, d.h. in Z-Richtung ineinander gesetzt, um einerseits die Zirkulationskammer 14 abgedichtet auszubilden und andererseits die PTC-Heizelemente 28 in die U-förmigen Ausnehmungen 24 einzusetzen und über ihre nach oben frei abragenden Kontaktzungen 28.1 elektrisch an die Anschlussleiterplatte 40 anzuschließen. In dieser Fügerichtung werden auch die Thermofühler in die Messfühlerdome 26a, 26b eingesetzt und danach über den Messleitungsstrang 36 elektrisch angeschlossen. Zuletzt wird diese Anordnung durch den Anschlussgehäusedeckel 48 abgedeckt und eingesiegelt, so dass auch die in der Anschlusskammer 30 vorgesehenen elektrischen Leitungsbahnen oberseitig gegenüber der Umgebung abgedichtet sind. Dazu hat die Kunststoffplatte 42 von ihrer Oberseite abragende Abstandshalter 56, die einteilig an der Kunststoffplatte 42 ausgeformt sind und über welche der Anschlussgehäusedeckel 48 sicher von den elektrischen Leiterbahnen der Anschlussleiterplatte 40 beabstandet gehalten ist. Auch wird bei eingepresstem Anschlussgehäusedeckel 48 die auf einen Kunststoffrahmen 58 der PTC-Heizelemente 28 aufgesetzte Anschlussleiterplatte 40 durch die Abstandshalter 56 nieder und in der Einbaulage gehalten.

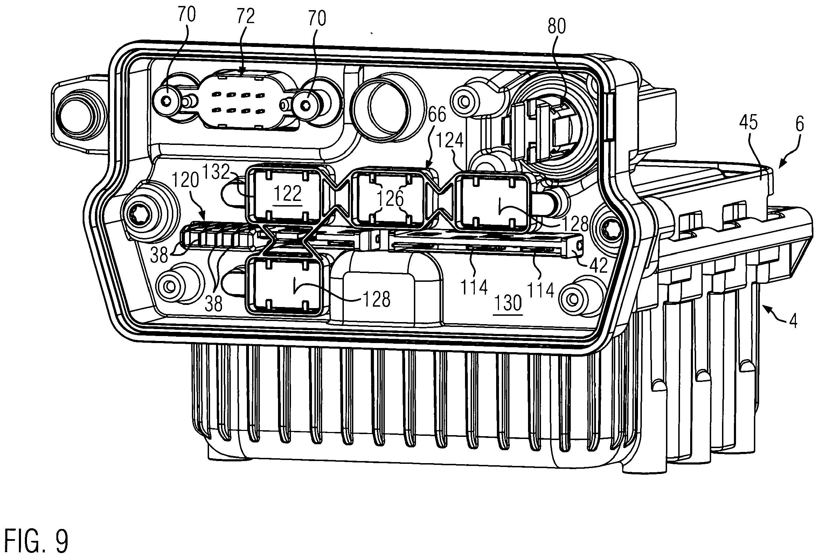

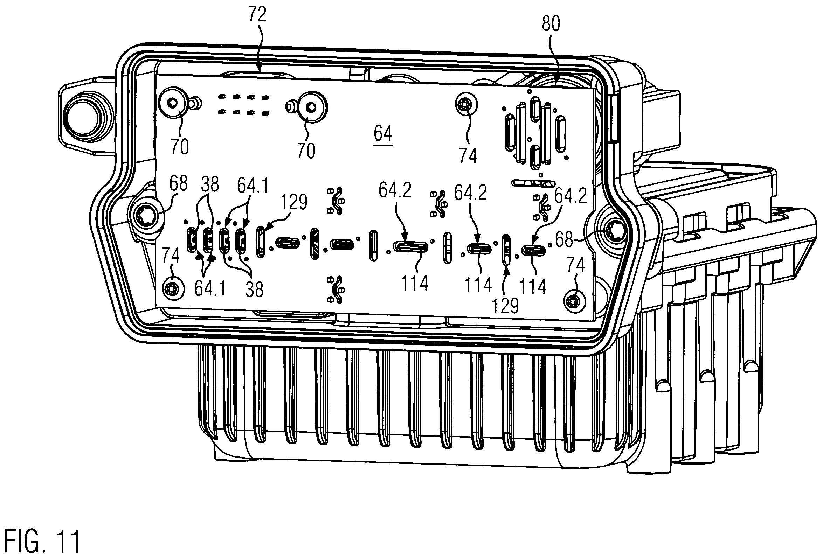

Das in den Figuren 1 und 2 gezeigte Ausführungsbeispiel hat ferner ein metallisches Steuergehäuse 60, in dem eine unter anderem mit Halbleiter-Leistungsschaltern 62 bestückte Steuerleiterplatte 64 angeordnet ist, sowie eine mit Bezugszeichen 66 gekennzeichnete, spritzgegossene Rahmenanordnung 66 aus Kunststoff, auf die nachfolgend noch näher eingegangen werden wird. Befestigungsschrauben 68 dienen der Befestigung des metallischen Steuergehäuses 60 an dem ebenfalls metallischen Gehäusedeckel 6. Steckerbefestigungsschrauben 70 dienen der Befestigung eines Steuersteckers 72 an der Außenseite des Steuergehäuses 60 (vgl. Fig. 9, 11). Mit Bezugszeichen 74 gekennzeichnete Befestigungsstifte dienen der Befestigung der Steuerleiterplatte 64 in dem Steuergehäuse 60 (vgl. Fig. 11).

Mit Bezugszeichen 76 ist ein Masseanschlussstift gekennzeichnet, der das Steuergehäuse 60 in Richtung auf das Gehäuse 2 überragt (vgl. Figur 1). Mit Bezugszeichen 78 ist ein Steuergehäusedeckel gekennzeichnet, der wie der Anschlussgehäusedeckel 48 ausgebildet ist.

Ein mit Bezugszeichen 80 gekennzeichneter Leistungsstecker ist über zwei Sicherungsstifte 82 an der Außenseite des Steuergehäuses 60 befestigt. Schließlich sind zwei längliche Stangen 84 in Figur 2 dargestellt, die als Formschlusselemente einander gegenüberliegende Anlageflächen von Gehäuseunterteil 4 und Gehäusedeckel 6 gegeneinander verriegeln. Gehäuseteil 4 und Gehäusedeckel 6 haben hierzu alternierende einander übergreifende Befestigungsabschnitte 86, 88, auf die nachstehend noch eingegangen werden wird.

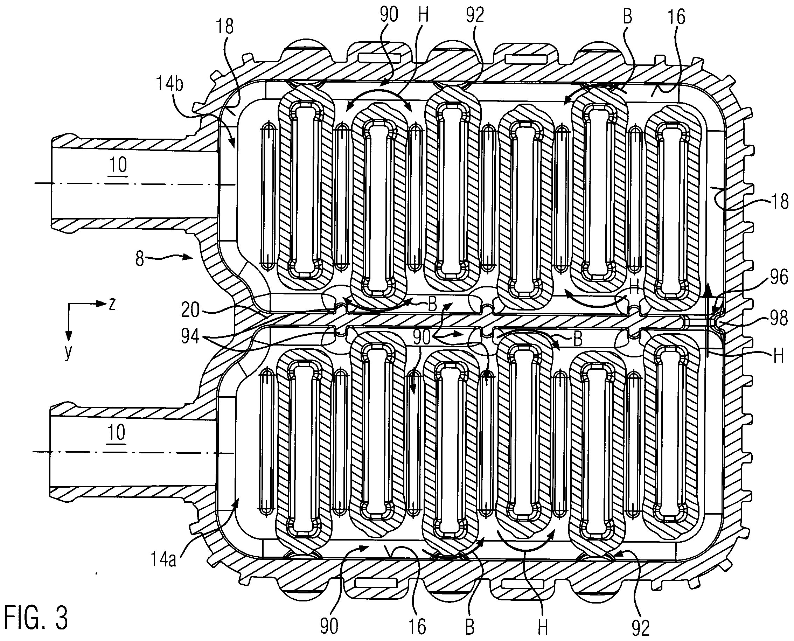

Wie die Schnittansicht in der X-Y-Ebene nach Figur 3 verdeutlicht, sind die einzelnen Heizrippen 22 jeder einzelnen Zirkulations-Teilkammer 14a, 14b in X-Richtung, d.h. Längsrichtung des Gehäuses 2 hintereinander vorgesehen. In jeder der Teilkammern 14a, 14b befindet sich in X-Richtung jeweils eine einzige Heizrippe 22 hinter einer einzigen anderen Heizrippe 22. Die Heizrippen 22 sind allerdings in Y-Richtung alternierend versetzt vorgesehen. Hierdurch ergibt sich ein mit Bezugszeichen 90 gekennzeichneter, mäandrierender Strömungskanal innerhalb der Zirkulations-Teilkammern 14a, 14b, der eine Hauptströmung (Pfeil H) vorgibt. Die einzelnen Heizrippen 22 schließen allerdings mit Ihrer dem Strömungskanal 90 für die Hauptströmung H gegenüberliegenden Seite nicht unmittelbar an die die Zirkulations-Teilkammer 14a, bzw. 14b begrenzende Längsseitenwand 16 bzw. die Abteilwand 20 an. Vielmehr befindet sich dort ein Spalt 92, der eine mit B gekennzeichnete Bypassströmung erlaubt. Wie Figur 3 zu entnehmen ist, hat der Spalt 92 eine Spaltweite entsprechend 5% bis 20%, bevorzugt 7% bis 15 % der lichten Weite zwischen der gegenüberliegenden Stirnseite der entsprechenden Heizrippe 22 und der Längsseitenwand 16 bzw. der Abteilwand 20. Die Spaltweite beträgt vorzugsweise zwischen 3,0 und 0,5 mm, besonders bevorzugt zwischen 2,0 und 0,7 mm. Ganz besonders bevorzugt hat der Spalt eine Weite von zwischen 1,5 und 0,8 mm. Setzt man die jeweilige Spaltweite in Bezug zu der Breite B des Strömungskanals 90, so ergeben sich Verhältnisse von Breite zu Spaltweite von zwischen 4 und 15, bevorzugt zwischen 6 und 10.

Dem Spalt in Strömungsrichtung vorgelagert weist bei dem gezeigten Ausführungsbeispiel jedenfalls die Abteilwand 20 im Strömungskanal 90 Längsrippen 94 auf, durch welche eine Ablösung der Hauptströmung H von der ansonsten eben und gerade verlaufenden Abteilwand 20 abgelöst wird. Wie des Weiteren die Figur 3 erkennen lässt, sind die Heizrippen 22 zu ihrem stirnseitigen Ende hin gegenüber dem mittleren Bereich leicht verdickt. In dem mittleren Bereich bilden die Heizrippen 22 innen ebene Anlageflächen 22.1 für die elektrischen Heizelemente 28 aus.

In Verlängerung der Abteilwand 20 und gegenüberliegend zu den Anschlussstutzen 10 ist ein Strömungsdurchlass 96 vorgesehen, der einen Durchgang der Strömung zwischen den beiden Zirkulations-Teilkammern 14a, 14b erlaubt. Dabei bleibt die Hauptströmung H jedoch in der X-Y-Darstellungsebene gemäß Figur 3. Der Strömungsdurchlass 96 wird wandnah von einer Längsrippe 98 begrenzt, die von der ansonsten ebenen Stirnseitenwand 18 abragt und in Höhenrichtung von einem Boden 100 zu der Trennwand 12 durchlaufend ausgebildet ist.

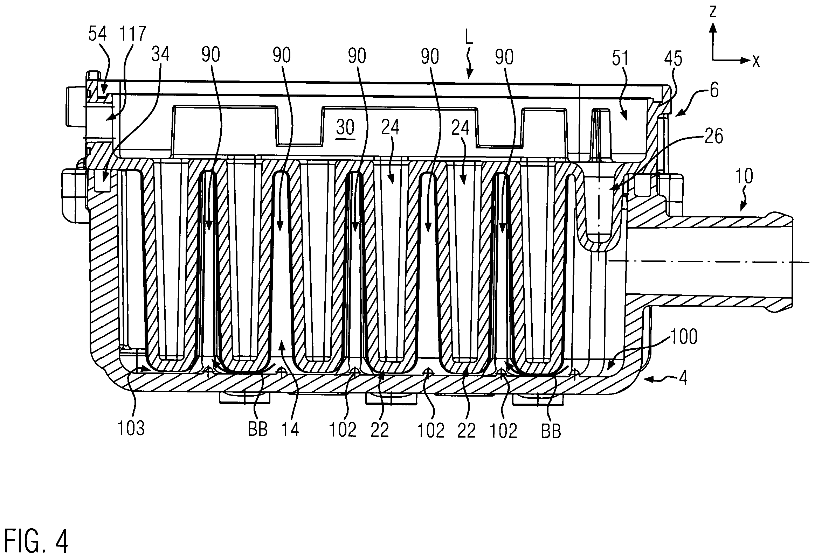

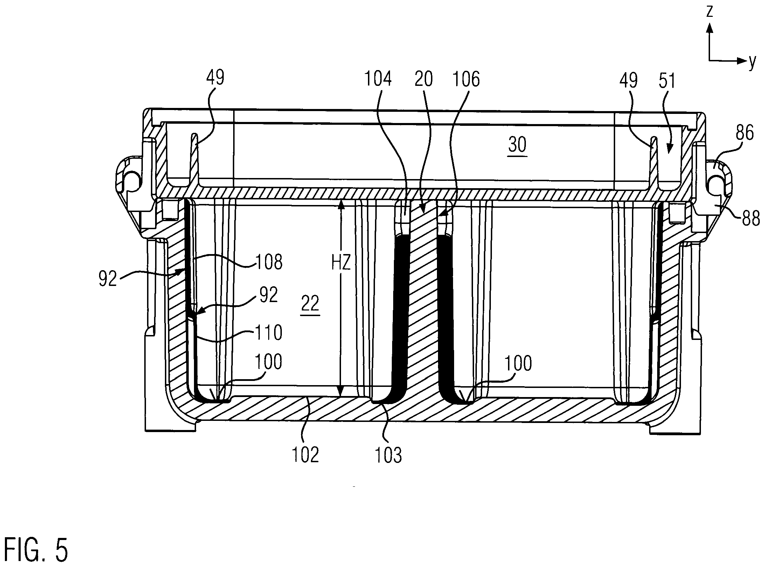

In Figur 3 und insbesondere den Figuren 4 und 5 sind ferner von dem Boden 100 abragende Querrippen 102 zu erkennen, die zwischen benachbarten Heizrippen 22 vorgesehen sind. Die Querrippen 102 überragen das freie untere Ende der Heizrippen 22 (vgl. Figur 4) und sorgen ebenfalls für eine Strömungsablösung von dem Boden 100. Wie ferner aus Figur 4 ersichtlich hat das freie Ende 22.2 der Heizrippe 22 nur einen geringen Abstand von 8 mm bis 10 mm zu dem Boden 100, so dass sich ein Bodenspalt 103 ergibt, der eine Boden-Bypassströmung BB erlaubt.

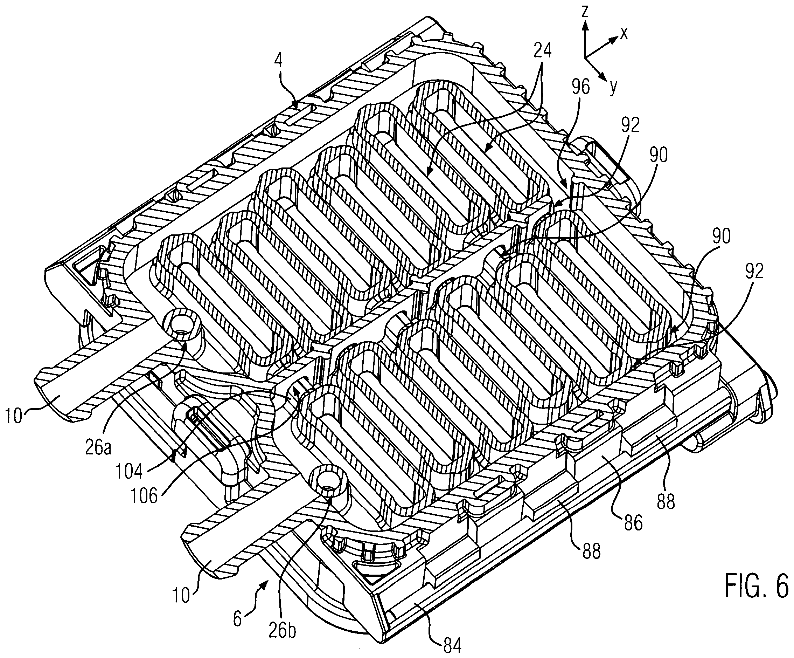

In den zuvor beschriebenen Figuren sowie in Figur 6 sind kartesische Koordinaten X, Y und Z eingetragen. Es ergibt sich aufgrund der vorherigen Beschreibung, dass die Hauptströmung H sich allein in der X-Y-Ebene erstreckt (vgl. Fig. 3). Die Anschlussstutzen 10 liegen auf einer Höhe in Z-Richtung, vgl. Fig. 2. Eine Umlenkung der Hauptströmung H um die jeweiligen Heizrippen 22 erfolgt allein um Umlenkkanten, die sich im Wesentlichen in der Z-Richtung erstrecken, so die Stirnseiten der Heizrippen 22 bzw. die den Strömungsdurchlass 96 begrenzenden Wandungsteile des Gehäuseunterteils 4. Speziell wird die Hauptströmung H nicht zwischen den beiden Zirkulations-Teilkammern 14a, 14b in eine andere, von der vorherigen Strömungsebene in Z-Richtung getrennte Strömungsebene überführt.

Nachstehend werden Details der den Bypassstrom B begrenzenden Wandungen von Gehäuseunterteil 4 und Gehäusedeckel 6 beschrieben, die insbesondere den Figuren 3, 5 und 6 zu entnehmen sind. Dabei ragen die Heizrippen 22 von der im Grunde eben und gerade durchgehend verlaufenden Trennwand 12 ab. In Y-Richtung benachbarte und unterschiedlichen Zirkulations-Teilkammern 14a, 14b zugeordnete Heizrippen 22 sind über einen die Trennwand 12 überragenden Verbindungssteg 104 miteinander verbunden, für welchen die Abteilwand 20 eine korrespondierend hierzu ausgebildete Verbindungsstegaufnahme 106 ausbildet. Eine vollständige Abdichtung zwischen den Zirkulations-Teilkammern 14a, 14b ist nicht notwendig. Gleichwohl ist es gewünscht, durch entsprechende Ausgestaltung der Abteilwand 20 eine Leckageströmung im Wesentlichen zu vermeiden und die Hauptströmung zwischen den Zirkulations-Teilkammern 14a, 14b möglichst vollständig durch den Strömungsdurchlass 96 hindurchzuführen.

Die Heizrippen 22 haben einen den Spalt 92 begrenzenden Heizrippensteg 108, der sich in etwa über 3/5 einer Höhe HZ der Zirkulationskammer erstreckt (vgl. Figur 5). In Fortsetzung dieser Heizrippenstege 108 ist ein von dem Boden 100 abragender und durch das Gehäuseunterteil 4 einteilig ausgeformter Gehäusesteg 110 vorgesehen. Zwischen den jeweiligen Stegen 108, 110 und der gegenüberliegenden Gegenfläche der Heizrippe 22 bzw. des Gehäuseunterteils 6 wird der zuvor erwähnte Spalt 92 gebildet. Die Stege 108, 110 enden in etwa höhengleich, allerdings in Höhenrichtung mit einem geringen Abstand, so dass auch zwischen den Stegen 108, 110 ein die Bypassströmung B ermöglichender Spalt 92 vorgesehen ist.

Nachfolgend werden die besondere Ausgestaltung der Anschlussleiterplatte 40 und das Fügen von Leistungsteil L und Steuerteil S näher erläutert. Der Leistungsteil L besteht dabei aus den Figur 2, links übereinander dargestellten Bauteilen, nämlich dem Gehäuseunterteil 4, dem Dichtelement 32, dem Gehäusedeckel 6, den darin aufgenommenen elektrischen Heizelementen 28, dem Messleitungsstrang 36 und der Anschlussleiterplatte 40 sowie dem diese abdeckenden Anschlussgehäusedeckel 48. Zum Leistungsteil L gehören auch die zum Fügen von Gehäuseunterteil 4 und Gehäusedeckel 6 vorgesehenen Stangen 84. Der Steuerteil S umfasst im Wesentlichen das Steuergehäuse 60, die darin aufgenommene Steuerleiterplatte 64, die zwischen dem Steuergehäuse 60 und der Steuerleiterplatte 64 vorgesehene Rahmenanordnung 66 sowie schließlich den metallischen Steuergehäusedeckel 78. Dabei ist zu vermerken, dass die jeweiligen Deckel 48 und 78 aus gestanztem Blech hergestellt sind und durch Stanzen und Biegen daran einteilig ausgebildete metallische Krallen 112 umfassen, die mit den zugeordneten Wandungen von Gehäusedeckel 6 bzw. Steuergehäuse 60 zusammenwirken, um eine umfängliche Abschirmung zu bilden, die einerseits die Anschlussleiterplatte 40 umschließt und andererseits die Steuerleiterplatte 64.

Beim Herstellen des Leistungsteils L wird der Gehäusedeckel 6 unter Kompression des Dichtelementes 32 auf das Gehäuseunterteil 4 aufgesetzt. Die alternierenden, ineinander greifenden Befestigungsabschnitte 86, 88 gleiten dabei aneinander vorbei. Einander gegenüberliegende Anlageflächen dieser Befestigungsabschnitte 86, 88 werden durch den äußeren Druck so weit voneinander beabstandet, dass die Stangen 84 aus der in Figur 2, rechts gezeigten Lage in X-Richtung zwischen die Anlageflächen der Befestigungsabschnitte 86, 88 gebracht werden können. Danach wird die äußere Kraft entlastet. Das elastisch komprimierte Dichtelement 32 drückt die beiden Teile 4, 6 in Z-Richtung auseinander. Die einander gegenüberliegenden Anlageflächen der Befestigungsabschnitte 86, 88 legen sich schließlich an die Stangen 84 an, welche eine weitere Bewegung der Teile 4, 6 verhindern. Danach sind das Gehäuseunterteil 4 und der Gehäusedeckel 6 formschlüssig miteinander verbunden. Es ergibt sich eine einfache formschlüssige Verbindung der wesentlichen Komponenten des Leistungsteils L.

Dabei stoßen die Stangen 84 in Figur 2, links gegen durch das Gehäuseunterteil 4 ausgebildete Anschlagflächen. So sind die Stangen 84 in ihrer Längsrichtung in X-Richtung einseitig festgelegt. Nach Aufbringen des Steuergehäuses 6, welches in axialer Verlängerung der Stangen 84 Gegenflächen für die Stangen 84 ausbildet, sind auch die Stangen 84 in der anderen Richtung und damit insgesamt in X-Richtung zwischen zwei gegenüberliegenden Anschlägen formschlüssig gesichert, so dass diese am Ort bleiben.

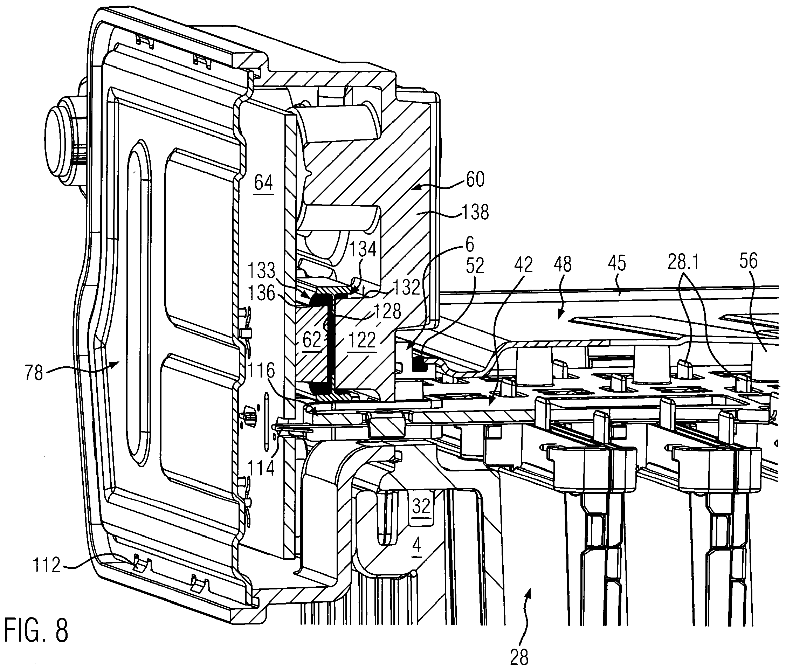

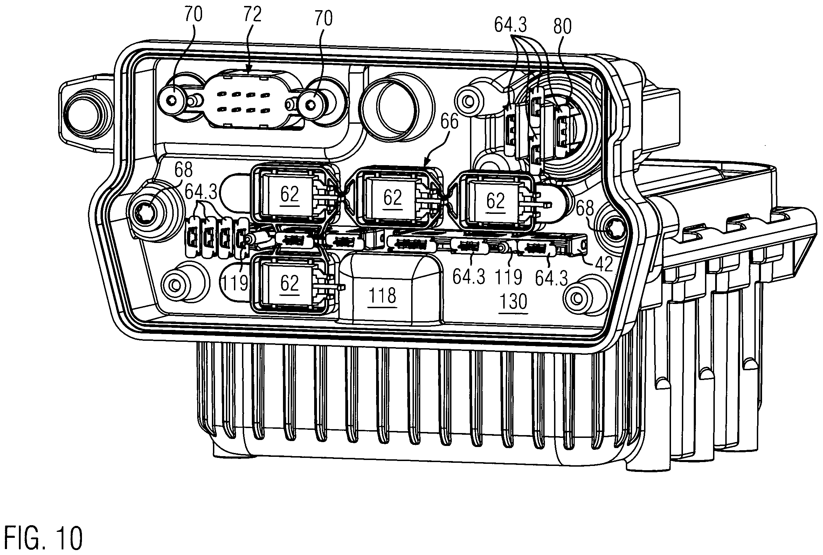

Wie insbesondere der Figur 8 zu entnehmen ist, überragt die Anschlussleiterplatte 40 sowohl mit ihren durch Stanzen der Blechplatine 44 gebildeten Anschlussleiterplatte-Anschlussfahnen 114 wie auch durch einen Endabschnitt 116 der Kunststoffplatte 42 den Leistungsteil L, d.h. das Gehäuse 2. Dazu weist der Gehäusedeckel 6 in dem Rand 45 eine Anschlussleiterplatte-Durchführöffnung 117 auf (vgl. Fig. 4). Auf dieses freiliegende Ende der Anschlussleiterplatte 40 wird das Steuerteil L nach noch nachfolgend zu beschreibender Vormontage der in dem Steuergehäuse 60 aufgenommenen Bauelemente aufgeschoben. Der Figur 10 ist ferner eine Ausgestaltung zu entnehmen, bei welcher der Endabschnitt 116 der Kunststoffplatte 42 zudem noch durch Positionierzapfen 119 überragt ist, welche die Anschlussfahnen 114 überragen.

Wie insbesondere aus Figur 9 ersichtlich, hat das Steuergehäuse 60 eine Anschlussleiterplatten-Anschlussöffnung 118, deren Abmessung exakt auf die Kontur des Endabschnitts 116 der Anschlussleiterplatte 40 angepasst ist, so dass sich eine Schiebeführung ergibt. Dies schließt auch einen leicht verdickten Bereich der Kunststoffplatte 42 ein, welcher - in Figur 9, links dargestellt - Messzungenaufnahmen 120 für die zuvor bereits erwähnten Messleitungsanschlusszungen 38 aufweist. In diesen Messzungenaufnahmen 120 sind die Messleitungsanschlusszungen 38 positioniert gehalten, so dass deren freie Enden wie auch die Anschlussleiterplatten-Anschlussfahnen 114 die Kunststoffplatte 42 überragen.

Figur 9 verdeutlich ferner die zuvor bereits erwähnte Rahmenanordnung 66. Es handelt sich um eine Anordnung von vier Rahmen 124, die als spritzgegossene Einheit aus Silikon hergestellt und mit dem Steuergehäuse über Steckverbinder verbunden ist. Das Steuergehäuse 60 weist Vorsprünge 122 auf, die jeweils von einem einzelnen Rahmen 124 der Rahmenanordnung 66 umgeben sind. Einteilig an der Rahmenanordnung 66 angeformte Haltestege 126 ragen nach innen von den Rahmen 124 ab. Diese Haltestege 126 liegen stirnseitig auf von den jeweiligen Vorsprüngen 122 ausgebildeten ebenen Anlageflächen 128 auf.

Die Rahmen 124 umgeben die Leistungstransistoren 62 in einer nachstehend noch näher zu beschreibenden Weise. Die Steuerleiterplatte 64 wird nach Bestücken mit sämtlichen elektronischen und elektrischen Bauteilen und Steuerelementen zunächst in das Steuergehäuse 60 eingesetzt. Die Steuerleiterplatte 64 wird danach mit den Befestigungsstiften 74 gegenüber dem Steuergehäuse 60 befestigt. Die so vormontierte Einheit aus Steuergehäuse 60, Rahmenanordnung 66 und Steuerleiterplatte 64 wird danach auf das Leistungsteil in einer Richtung aufgeschoben, die quer zur Einbringrichtung der Heizelemente 28 in die U-förmigen Aufnahmen 24 verläuft. Hierbei treffen zunächst die Positionierzapfen 119 auf die Ebene der Steuerleiterplatte 64. Korrespondierend zu den Positionierzapfen 119 sind an vorbestimmten Stellen und in Figur 11 mit Bezugszeichen 129 gekennzeichnete Positionierzapfen-Aufnahmen vorgesehen. In diese Aufnahmen 129 der Steuerleiterplatte 64 greifen die Positionierzapfen 119 mit geringem Spiel in Querrichtung ein. Bei dem gezeigten Ausführungsbeispiel sind diese Positionierzapfen-Aufnahmen 129 als Längsschlitze ausgebildet und geben dementsprechend lediglich eine Positionierung in einer Richtung quer hierzu im Grunde exakt vor. Selbstverständlich können die entsprechenden Öffnungen auch kreisrund und nach einer Art Passung für die Positionierzapfen 119 ausgebildet sein, um die relative Lage zwischen der Anschlussleiterplatte 40 und der Steuerleiterplatte 64 eindeutig vorzugeben. Bei dem gezeigten Ausführungsbeispiel wird die Vorpositionierung indes durch die Passung zwischen den Abmessungen der Kunststoffplatte 42 und der Abmessung der Anschlussöffnung 118 ganz wesentlich mitbestimmt, so dass eine Passung vorliegend zwischen der Positionierzapfen-Aufnahme 129 und dem zugeordneten Positionierzapfen 119 die Position lediglich in Y-Richtung exakt vorgeben muss. Beim weiteren Aufschieben des Steuerteils S auf den Leistungsteil L greifen die freiliegenden Messleitungsanschlusszungen 38 in an der Steuerleiterplatte 64 ausgesparte Bohrungen 64.1 ein, wie dies aus Figur 11 ersichtlich ist. Ferner durchsetzen die Anschlussleiterplatten-Anschlussfahnen 114 Bohrungen 64.2 in der Steuerleiterplatte 64. Dieser Sachverhalt ist ebenfalls in Figur 11 dargestellt. In die entsprechenden Bohrungen 64.1; 64.2 der Steuerleiterplatte 64 sind weibliche Kontaktelemente 64.3 eingebracht, die mit der Steuerleiterplatte 64 mechanisch und dadurch mit Leiterbahnen der Steuerleiterplatte 64 elektrisch verbunden sind, wie sie in der EP 2 236 330 A1 der vorliegenden Anmelderin beschrieben sind. Der Offenbarungsgehalt dieser früheren Anmeldung wird durch Bezugnahme in den Offenbarungsgehalt der vorliegenden Anmeldung aufgenommen. (Die weiblichen Kontaktelemente 64.3 sind in Figur 10 ohne die zugehörige Steuerleiterplatte 64 aus Darstellungsgründen isoliert dargestellt.) So ist die Steuerleiterplatte 64 nach dem Aufschieben des vormontierten Steuergehäuses 60 in X-Richtung gegen das Leistungsteil L elektrisch mit der Anschlussleiterplatte 40 verbunden. Üblicherweise wird vor dem Aufschieben des Steuergehäuses 60 das Steuerteil S vollständig vormontiert, d.h. das Steuergehäuse 60 mit dem Steuergehäusedeckel 78 verschlossen.

Nachstehend wird die besondere Ausgestaltung des Steuergehäuses 60 und die darin verwirklichte Montage der Halbleiter-Leistungsschalter 62 beschrieben.

Das aus Metall gebildete Steuergehäuse 60 hat vorliegend vier rechteckige Anlageflächen 128, die jeweils durch die Gehäusevorsprünge 122 ausgebildet sind, die von einem im Grunde ebenen Steuergehäuseboden 130 in Richtung auf die Steuerleiterplatte 64 vorspringen. Seitlich neben den oberen drei Gehäusevorsprüngen 122 sind jeweils den Steuergehäuseboden 130 überragende Montagezapfen durch das das Steuergehäuse 60 bildende Material einteilig ausgeformt, welche mit einer Bohrung versehen sind, in welche Befestigungszapfen der Rahmenanordnung 66 eingreifen und dort befestigt sind. Eine entsprechende Ausgestaltung ergibt sich links von dem unteren Gehäusevorsprung 122 gemäß der Darstellung von Figur 9. Wie sich weiter aus dieser Figur ergibt, weist jeder Rahmen 124 der Rahmenanordnung 66 vier Haltestege 126 auf, die oben auf der Anlagefläche 128 aufliegen und von einem umfänglich die Anlagefläche 128 umgebenden Rand nach innen vorspringen. Die Rahmen 124 umschließen den Gehäusevorsprung 128 mit einem gewissen Abstand. Die Rahmen 124 haben ferner - wie insbesondere aus Figur 8 ersichtlich - eine in Richtung auf den Steuergehäuseboden 130 vorspringenden unteren Rand 124.1, der den Haltesteg 126 nach unten überragt und jedenfalls teilweise eine Umfangsfläche 132 des Gehäusevorsprungs 122 umgibt, sowie einen in die entgegen gesetzte Richtung abragenden oberen Rand 124.2, der zwischen dem Leistungsschalter 62 und dem Rahmen 124 einen Zwischenraum 133 vorgibt. Durch die Anordnung des unteren Randes 124.1 mit Abstand zu dem Gehäusevorsprung 122 ergibt sich zwischen dem Rahmen 124 und diesem Gehäusevorsprung 122 ein umlaufender, d.h. ringförmiger Klebespalt 134.

Die Figur 8 zeigt die Situation nach dem Einbau der zunächst vormontierten und als bauliche Einheit in das Steuergehäuse 60 eingebrachten Steuerleiterplatte 64. Dabei liegen die Halbleiter-Leistungstransistoren 62 stirnseitig gegen die Haltestege 126 an, welche dementsprechend einen definierten Abstand zwischen den Halbleiter-Leistungstransistoren 62 und der Anlagefläche 128 vorgeben. Jeglicher Zwischenraum zwischen der Anlagefläche 128 und dem Halbleiter-Leistungstransistor 62 ist durch einen Silikonkleber 136 ausgefüllt, der vorliegend ein Ausführungsbeispiel für die adhäsive Masse darstellt. Der Silikonkleber 136 hat eine gute Wärmeleitfähigkeit, ist indes elektrisch isolierend. Der obere Rand 124.2 umschließt einen Montageraum 137 für den Halbleiter-Leistungsschalter 62, der nach dem Einbringen desselben in den Rahmen 124 vollständig von dem Silikonkleber 136 ausgefüllt ist. Wie insbesondere aus Figur 8 ersichtlich ist, überragt der Silikonkleber 136 gar das zu der Steuerleiterplatte 64 vorspringende Ende des oberen Randes 124.2

Zur Montage wird der Silikonkleber 136 zunächst auf die Anlagefläche 128 aufgebracht. Danach wird die vormontierte Steuerleiterplatte 64 in das Steuergehäuse 60 eingebracht. Zum Ende dieser Einbringbewegung trifft die stirnseitige Vorderfläche der jeweiligen Halbleiter-Leistungstransistoren 62 auf den Silikonkleber 136. Dieser wird bei fortschreitender Einbringbewegung der Steuerleiterplatte 64 zunächst in der Ebene verdrängt und verteilt sich gleichmäßig auf der Anlagefläche 128. Es ist aber so viel Silikonkleber 136 auf jede der Anlageflächen 126 aufgebracht, dass die von dem Rahmen 124 jeweils umgebene Anlagefläche 128 nicht nur vollständig in Umfangsrichtung mit dem Silikonkleber 136 benetzt wird. Vielmehr steigt der Silikonkleber 136 durch das Verdrängen des Volumens zwischen der Anlagefläche 128 und dem Halbleiter-Leistungstransistor 62 sowohl in Richtung auf die Steuerleiterplatte 64 als auch in den Klebespalt 134. So ergibt sich eine gute Einsiegelung des Halbleiter-Leistungstransistors 62. Auch ist der Rahmen 124 relativ großflächig mit dem Silikonkleber 136 und damit haftvermittelnd und fest mit dem Steuergehäuse 60 verbunden. Des Weiteren sorgt der Silikonkleber 136 aufgrund seiner guten Wärmeleitfähigkeit zu einer guten Ableitung der von dem Halbleiter-Leistungstransistor 62 erzeugten Verlustleistung. Auf der dem Halbleiter-Leistungstransistor 62 gegenüberliegenden Seite bildet das Steuergehäuse 60 einteilig daran angeformte Kühlrippen 138 aus. Diese sind zumindest auch genau gegenüberliegend zu den jeweiligen Halbleiter-Leistungstransistoren 62 vorgesehen.

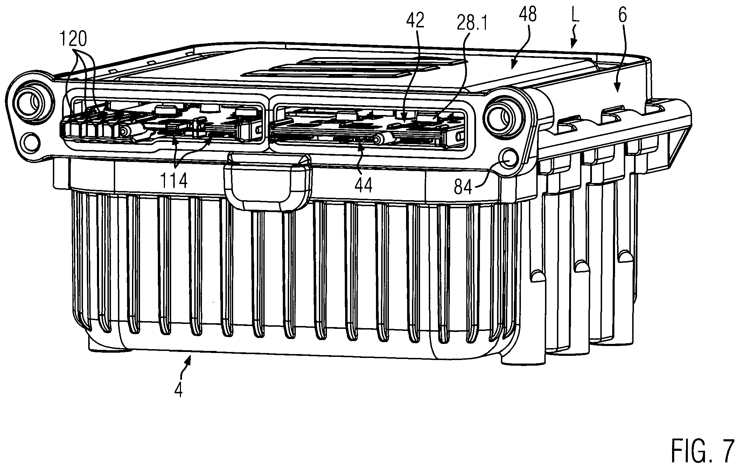

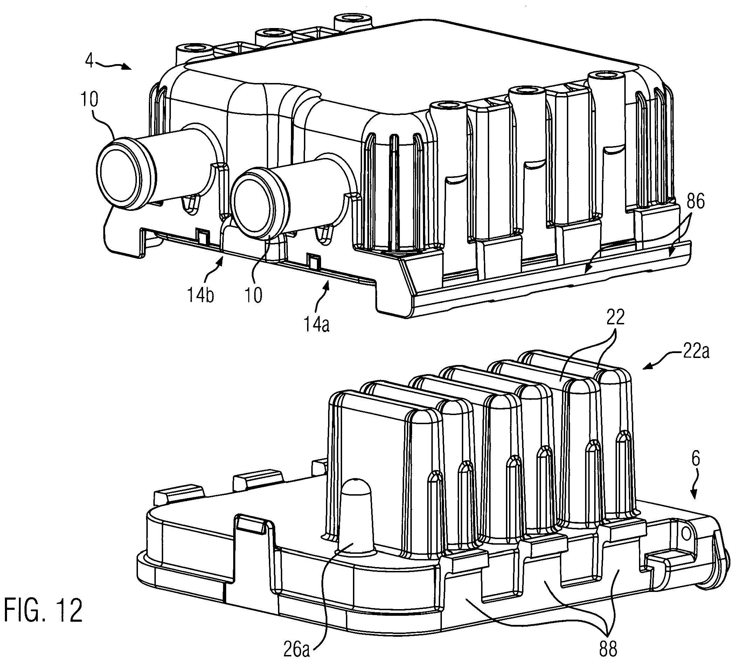

Die Figur 12 zeigt eine Abwandlung zu dem zuvor diskutierten Ausführungsbeispiel. Dieses kann mit denselben Komponenten wie zuvor beschrieben bestückt sein, um den Leistungsteil L auszubilden. Auch kann der Steuerteil S in identischer Weise ausgebildet und seitlich an den Leitungsteil L angeflanscht sein. Das in Figur 12 gezeigte Ausführungsbeispiel des Gehäuses 2 unterscheidet sich lediglich dadurch von dem Leistungsteil L nach den vorherigen Figuren, dass der Gehäusedeckel 4 lediglich eine Reihe von in Richtung hintereinander vorgesehenen Heizrippen 22a aufweist. Diese sind in Verlängerung des Einlassstutzens 10 vorgesehen. In der anderen Zirkulations-Teilkammer 14b befinden sich keine Heizrippen 22. Diese Zirkulations-Teilkammer 14b dient lediglich der Rückführung des zu erwärmenden Fluids. Die Zirkulations-Teilkammer 14a ist dementsprechend wie bei dem zuvor diskutierten Ausführungsbeispiel aufgebaut; die Zirkulations-Teilkammer 14b dient aber lediglich der Strömungsrückführung zu dem Auslassstutzen 10, links in Fig. 12. So hat das Ausführungsbeispiel nach Figur 12 auch lediglich in etwa die Hälfte der Wärmeleistung im Vergleich zu dem unter Bezugnahme auf die Figuren 1 bis 11 diskutierten ersten Ausführungsbeispiel.

### Bezugszeichenliste

- 2: Gehäuse
- 4: Gehäuseunterteil
- 6: Gehäusedeckel
- 8: erste Stirnseite
- 10: Anschlussstutzen
- 12: Trennwand
- 14: Zirkulationskammer
- 14a, 14b: Zirkulations-Teilkammer
- 16: Längsseitenwand
- 18: Stirnseitenwand
- 20: Abteilwand
- 22: Heizrippe
- 22.1: ebene Anlagefläche der Heizrippe
- 22.2: freies Ende der Heizrippe
- 24: U-förmige Ausnehmungen
- 26a, 26b: Messfühlerdom
- 28: elektrisches Heizelement
- 28.1: Kontaktzunge
- 30: Anschlusskammer
- 32: Dichtelement
- 34: Nut
- 36: Messleitungsstrang
- 37: Messfühler
- 38: Messleitungsanschlusszunge
- 40: Anschlussleiterplatte
- 42: Kunststoffplatte
- 44: Blechplatine
- 45: Rand
- 46: Anschlussgehäuse
- 48: Anschlussgehäusedeckel
- 49: Steg
- 50: Blechplatte
- 51: Aufnahmeraum
- 52: TPE-Dichtung
- 54: Dichtnut
- 56: Abstandshalter
- 58: Kunststoffrahmen
- 60: Steuergehäuse
- 62: Halbleiter-Leistungsschalter /-Leistungstransistor
- 64: Steuerleiterplatte
- 64.1: Bohrung für Messleitungsanschlusszunge 38
- 64.2: Bohrung für Anschlussleiterplatten-Anschlussfahne 114
- 64.3: weibliche Kontaktelemente
- 66: Rahmenanordnung
- 68: Befestigungsschraube
- 70: Steckerbefestigungsschraube
- 72: Steuerstecker
- 74: Befestigungsstift
- 76: Masseanschlussstift
- 78: Steuergehäusedeckel
- 80: Leistungsstecker
- 82: Sicherungsstift
- 84: Stange
- 86: Befestigungsabschnitt des Gehäuseunterteils
- 88: Befestigungsabschnitt des Gehäusedeckels
- 90: Strömungskanal
- 92: Spalt
- 94: Längsrippe (Abteilwand 20)
- 96: Steuerungsdurchlass
- 98: Längsrippe (Strömungsdurchlass 96)
- 100: Boden
- 102: Querrippe
- 103: Bodenspalt
- 104: Verbindungssteg
- 106: Verbindungsstegaufnahme
- 108: Heizrippensteg
- 110: Gehäusesteg
- 112: Kralle
- 114: Anschlussleiterplatten-Anschlussfahne
- 116: Endabschnitt
- 117: Anschlussleiterplatten-Durchführöffnung
- 118: Anschlussleiterplatten-Anschlussöffnung
- 119: Positionierzapfen
- 120: Messzungenaufnahme
- 122: Gehäusevorsprung
- 124: Rahmen
- 124.1: unterer Rand
- 124.2: oberer Rand
- 126: Haltesteg
- 128: Anlagefläche
- 129: Positionierzapfen-Aufnahme
- 130: Steuergehäuseboden
- 132: Umfangsfläche
- 133: Zwischenraum
- 134: Klebespalt
- 136: Silikonkleber
- 137: Montageraum
- 138: Kühlrippe
- B: Bypassströmung
- BB: Boden-Bypassströmung
- H: Hauptströmung
- HZ: Höhe der Zirkulationskammer 14
- L: Leistungsteil
- S: Steuerteil

## Patentansprüche

1. Elektrische Heizvorrichtung, insbesondere für ein Kraftfahrzeug, mit einem Gehäuse (2), welches eine von einem Medium durchströmbare Zirkulationskammer (14) umschließt, in welche wenigstens eine Heizrippe (22) hineinragt, die mit wenigstens einem PTC-Heizelement (28) in Wärme leitendem Kontakt steht, und mit einer in baulicher Einheit vorgesehenen Steuereinrichtung (S) mit wenigstens einer Steuerleiterplatte (64), die in einem Steuergehäuse (60) aufgenommen ist, und mit wenigstens einem Verlustleistung erzeugenden Halbleiter-Leistungsschalter (62), der elektrisch mit Leiterbahnen der Steuerleiterplatte (64) verbunden ist,
wobei
der Halbleiter-Leistungsschalter (62) Wärme leitend an dem Steuergehäuse (60) anliegend vorgesehen und unmittelbar daran befestigt ist,
**dadurch gekennzeichnet,**
**dass** der Halbleiter-Leistungsschalter (62) über eine adhäsive Masse (136) so mit dem Steuergehäuse (60) verbunden ist, dass die adhäsive Masse die Anlagefläche des Halbleiter-Leistungsschalters vollständig benetzt und die Seitenwände des Halbleiter-Leistungsschalters zumindest teilweise umgibt und dass der Halbleiter-Leistungsschalter (62) innerhalb eines Rahmens (124) aufgenommen ist, der die adhäsive Masse (136) umfänglich umgibt und der den Halbleiter-Leistungsschalter (62) mit Abstand umgibt.

2. Elektrische Heizvorrichtung nach Anspruch 1, **dadurch gekennzeichnet, dass** die adhäsive Masse (136) einen durch den Rahmen (124) umrahmten Montageraum (137) für den Halbleiter-Leistungsschalter (62) vollständig ausfüllt.

3. Elektrische Heizvorrichtung nach einem der vorherigen Ansprüche, **dadurch gekennzeichnet, dass** das Steuergehäuse (60) eine erhabene Anlagefläche (128) für den Halbleiter-Leistungsschalter (62) ausbildet.

4. Elektrische Heizvorrichtung nach Anspruch 3, **dadurch gekennzeichnet, dass** der Rahmen (124) gegenüber der Anlagefläche (128) vor- und zurückspringt.

5. Elektrische Heizvorrichtung nach Anspruch 4, **dadurch gekennzeichnet, dass** der zurückspringende Bereich (124.1) des Rahmens (124) einen die erhabene Anlagefläche (128) ausbildenden Gehäusevorsprung (122) mit Abstand umgibt.

6. Elektrische Heizvorrichtung nach einem der Ansprüche 1 bis 5, **dadurch gekennzeichnet, dass** der Rahmen (124) zumindest einen auf der Anlagefläche (128) aufliegenden Haltesteg (126) aufweist, der zwischen der Anlagefläche (128) und dem Halbleiter-Leistungsschalter (62) vorgesehen ist.

7. Elektrische Heizvorrichtung nach einem der Ansprüche 1 bis 6, **dadurch gekennzeichnet, dass** der Rahmen (124) aus Silikon gebildet ist.

8. Verfahren zur Herstellung einer elektrischen Heizvorrichtung, insbesondere für ein Kraftfahrzeug, mit einem Gehäuse (2), welches eine von einem Medium durchströmbare Zirkulationskammer (14) umschließt, in welche wenigstens eine Heizrippe (22) hineinragt, die mit wenigstens einem PTC-Heizelement (28) in Wärme leitendem Kontakt steht und mit einer in baulicher Einheit vorgesehenen Steuereinrichtung (S) mit wenigstens einer Steuerleiterplatte (64), die in einem Steuergehäuse (60) aufgenommen ist und mit wenigstens einem Verlustleistung erzeugenden Halbleiter-Leistungsschalter (62), der elektrisch mit Leiterbahnen der Steuerleiterplatte (64) verbunden ist,
wobei das Verfahren **dadurch gekennzeichnet ist, dass** die Steuerleiterplatte (64) vor dem Einbau in das Steuergehäuse (60) vormontiert und dass der Halbleiter-Leistungsschalter (62) beim Einbau in das Gehäuse (2) in eine adhäsive Masse (136) mit guter Wärmeleitfähigkeit eingebettet wird, so dass die adhäsive Masse die Anlagefläche des Halbleiter-Leistungsschalters vollständig benetzt und die Seitenwände des Halbleiter-Leistungsschalters zumindest teilweise umgibt, und dass die Masse (136) beim Aufdrücken des Halbleiter-Leistungsschalter (62) in einen umfänglich den Halbleiter-Leistungsschalter (62) umgebenden Zwischenraum (133) zwischen dem Halbleiter-Leistungsschalter (62) und einem den Halbleiter-Leistungsschalter (62) umgebenden Rahmen (124) und in Richtung auf die Steuerleiterplatte (64) verdrängt wird.

9. Verfahren nach Anspruch 8, **dadurch gekennzeichnet, dass** die Masse (136) beim Aufdrücken des Halbleiter-Leistungsschalters (62) in einer Richtung quer zu einer durch das Steuergehäuse (60) gebildeten Anlagefläche (128) verdrängt wird, so dass die Masse (136) auch eine Umfangsfläche des Halbleiter-Leistungsschalters (62) kontaktiert.

## Claims

1. Electric heating device, particularly for an automotive vehicle, comprising a housing (2) which surrounds a circulation chamber (14) through which a medium can flow and into which at least one heating rib (22) projects, which heating rib is in heat-conducting contact with a least one PTC heating element (28), and comprising a control device (S) which is provided in a structural unit, comprising at least one control board (64) which is received in a control housing (60), and comprising at least one semiconductor power switch (62) which generates power loss and which is electrically connected to conductor paths of the control board (64),
wherein
the semiconductor power switch (62) is provided adjacent to the control housing (60) in heat-conducting fashion and is directly fastened thereto,
**characterized in**
**that** the semiconductor power switch (62) is connected via an adhesive mass (136) to the control housing (60) in such a manner that the adhesive mass completely wets the contact surface of the semiconductor power switch and surrounds the sidewalls of the semiconductor power switch at least in part, and that the semiconductor power switch (62) is received within a frame (124) which circumferentially surrounds the adhesive mass (136) and which surrounds the semiconductor power switch (62) at a distance.

2. Electric heating device according to claim 1, **characterized in that** the adhesive mass (136) completely fills a mounting space (137) framed by the frame (124) for the semiconductor power switch (62).

3. Electric heating device according to any one of the preceding claims, **characterized in that** the control housing (60) forms an elevated contact surface (128) for the semiconductor power switch (62).

4. Electric heating device according to claim 3, **characterized in that** the frame (124) projects and recedes relative to the contact surface (128).

5. Electric heating device according to claim 4, **characterized in that** the receding portion (124.1) of the frame (124) surrounds at a distance a housing projection (122) which forms the elevated contact surface (128).

6. Electric heating device according to any one of claims 1 to 5, **characterized in that** the frame (124) comprises at least one holding web (126) which rests on the contact surface (128) and which is provided between the contact surface (128) and the semiconductor power switch (62).

7. Electric heating device according to any one of claims 1 to 6, **characterized in that** the frame (124) is made from silicone.

8. Method for producing an electric heating device, particularly for an automotive vehicle, comprising a housing (2) which surrounds a circulation chamber (14) through which a medium can flow and into which at least one heating rib (22) projects, which heating rib is in heat-conducting contact with at least one PCT heating element (28), and comprising a control device (S) which is provided in a structural unit, comprising at least one control board (62) which is received in a control housing (60), and comprising at least one semiconductor power switch (62) which generates power loss and which is electrically connected to conductor paths of the control board (64),
wherein the method is **characterized in that** the control board (64) is premounted prior to installation into the control housing (60) and that the semiconductor power switch (62) upon installation into the housing (2) is embedded into an adhesive mass (136) of good thermal conductivity, so that the adhesive mass completely wets the contact surface of the semiconductor power switch and surrounds the sidewalls of the semiconductor switch at least in part, and that the mass (136) upon pressing of the semiconductor power switch (62) is displaced into an interspace (133) circumferentially surrounding the semiconductor power switch (62) between the semiconductor power switch (62) and a frame (124) surrounding the semiconductor power switch (62), and towards the control board (64).

9. Method according to claim 8, **characterized in that** the mass (136) upon pressing of the semiconductor switch (62) is displaced into a direction transverse to a contact surface (128) formed by the control housing (60), so that the mass (136) also contacts a circumferential surface of the semiconductor power switch (62).

## Revendications

1. Dispositif de chauffage électrique, en particulier pour véhicule automobile, comportant un boîtier (2) qui renferme une chambre de circulation (14) à travers laquelle peut s'écouler un fluide, à l'intérieur de laquelle se projette au moins une nervure de chauffage (22) qui reste en contact thermoconducteur avec au moins un élément de chauffage à coefficient de température positif CPT (28), et avec un dispositif de commande (S) pourvu dans l'unité structurelle et comportant au moins une plaque à conducteurs de commande (64) logée dans un boîtier de commande (60), et avec au moins un interrupteur à semi-conducteur (62) produisant une dissipation de puissance et connecté électriquement à des pistes conductrices de la plaque à conducteurs de commande (64),
dans lequel l'interrupteur à semi-conducteur (62) est pourvu de manière adjacente au boîtier de commande (60) en conduction thermique avec celui-ci et y est fixé directement,
**caractérisé**
**en ce que** l'interrupteur à semi-conducteur (62) est connecté au boîtier de commande (60) via une masse adhésive (136) de telle sorte que la masse adhésive mouille entièrement la surface de contact de l'interrupteur à semi-conducteur et entoure au moins partiellement les parois latérales de l'interrupteur à semi-conducteur, et **en ce que** l'interrupteur à semi-conducteur (62) est logé dans un encadrement (124) qui entoure entièrement la masse adhésive (136) et qui entoure l'interrupteur à semi-conducteur (62) en laissant un espacement.

2. Dispositif de chauffage électrique selon la revendication 1, **caractérisé en ce que** la masse adhésive (136) remplit entièrement un espace de montage (137) pour l'interrupteur à semi-conducteur (62) encadré par l'encadrement (124).

3. Dispositif de chauffage électrique selon l'une des revendications précédentes, **caractérisé en ce que** le boîtier de commande (60) forme une surface de contact surélevée (128) pour l'interrupteur à semi-conducteur (62).

4. Dispositif de chauffage électrique selon la revendication 3, **caractérisé en ce que** l'encadrement (124) ressort vers l'avant et vers l'arrière par rapport à la surface de contact (128).

5. Dispositif de chauffage électrique selon la revendication 4, **caractérisé en ce que** la partie ressortant vers l'arrière (124.1) de l'encadrement (124) entoure avec un espacement la protubérance du boîtier (122) qui forme la surface de contact surélevée (128).

6. Dispositif de chauffage électrique selon l'une des revendications 1 à 5, **caractérisé en ce que** l'encadrement (124) comporte au moins une patte de retenue (126) reposant sur la surface de contact (128), pourvue entre la surface de contact (128) et l'interrupteur à semi-conducteur (62).

7. Dispositif de chauffage électrique selon l'une des revendications 1 à 6, **caractérisé en ce que** l'encadrement (124) est réalisé en silicone.

8. Procédé de fabrication d'un dispositif de chauffage électrique, en particulier pour véhicule automobile, comportant un boîtier (2) qui renferme une chambre de circulation (14) à travers laquelle peut s'écouler un fluide, à l'intérieur de laquelle se projette au moins une nervure de chauffage (22) qui reste en contact thermoconducteur avec au moins un élément de chauffage CPT (28), et avec un dispositif de commande (S) pourvu dans l'unité structurelle (S) et comportant au moins une plaque à conducteurs de commande (64) logée dans un boîtier de commande (60), et avec au moins un interrupteur à semi-conducteur (62) produisant une dissipation de puissance et connecté électriquement à des pistes conductrices de la plaque à conducteurs de commande (64),
dans lequel le procédé est **caractérisé en ce que** la plaque à conducteurs de commande (64) est prémontée avant son installation dans le boîtier de commande (60) et **en ce que** l'interrupteur à semi-conducteur (62) est incorporé dans une masse adhésive (136) présentant une bonne conductivité thermique lors de son installation dans le boîtier (2), de telle sorte que la masse adhésive mouille entièrement la surface de contact de l'interrupteur à semi-conducteur et entoure au moins partiellement les parois latérales de l'interrupteur à semi-conducteur, et **en ce que** lors d'une pression sur l'interrupteur à semi-conducteur (62), la masse (136) est repoussée dans un espace intermédiaire (133) entourant périphériquement l'interrupteur à semi-conducteur (62) entre l'interrupteur à semi-conducteur (62) et un encadrement (124) entourant l'interrupteur à semi-conducteur (62) et en direction de la plaque à conducteurs de commande (64).

9. Procédé selon la revendication 8, **caractérisé en ce que** lors d'une pression sur l'interrupteur à semi-conducteur (62), la masse (136) est repoussée dans une direction transversale par rapport à une surface de contact (128) constituée par le boîtier de commande (60), de telle sorte que la masse (136) entre également en contact avec une surface circonférentielle de l'interrupteur à semi-conducteur (62).
